# EUROPEAN PATENT APPLICATION

(11) **EP 2 990 961 A1**
(43) Date of publication of application: **02.03.2016**
(21) Application number: 14839899.3
(22) Date of filing: 19.02.2014
(51) Int. Cl.: G06F 17/30

(54) **METHOD, APPARATUS, AND ELECTRONIC DEVICE FOR ESTABLISHING VIRTUAL DIRECTORY**

(30) Priority: 26.08.2013 CN 201310376605
(71) Applicant: Xiaomi Inc., Beijing 100085 (CN)
(72) Inventor: NIU, Yi, Beijing 100085 (CN); LI, Chuangqi, Beijing 100085 (CN); LI, Yaozhong, Beijing 100085 (CN); TIAN, Li, Beijing 100085 (CN); WANG, Hui, Beijing 100085 (CN); QIAN, Cheng, Beijing 100085 (CN)
(74) Representative: Sadler, Peter Frederick
(86) International application number: PCT/CN2014/072267
(87) International publication number: WO 2015/027689

(57) **Abstract**

The present invention relates to the technical field of computers. Disclosed are a method, an apparatus, and an electronic device for establishing a virtual directory. The method comprises: traversing designated-type files in a storage region; extracting property information of the designated-type files that have been traversed, the property information comprising the front two or all three of names, playback addresses, and episode information of the designated-type files; and establishing a virtual directory according to the property information of the designated-type files. In the disclosure, all designated-type files in a designated storage region are acquired, and a virtual directory is established according to the property information of the designated-type files, which solves the problems in the prior art that, due to different storage positions of video files, it is difficult to correctly find a position of a to-be-played video file at a time and the operation process of searching for the position of the video file according to the memory is complicated, so that a needed designated-type file can be quickly found.

## Description

The present application claims benefits of the Chinese Patent application No. 201310376605.6, filed on August 26, 2013, the entire contents of which are incorporated herein by reference.

### TECHNOLOGY FIELD

The present disclosure relates a computer technology field, and more particularly to a method and apparatus for creating a virtual directory and an electronic device.

### BACKGROUND

Nowadays, some electronic devices may be connected with one and more external devices, such as an external mobile hard disk, a network shared device, and so on, and respective partitions inside these electronic devices and the external device(s) may store a lot of files.

When a user wants to view a certain video file, the user needs to determine in which partition of an electronic device or which of external devices the video file is stored depending on the user's memory, and then finds and plays the video file in the corresponding external device or the partition of the electronic device.

During the achievement of the present disclosure, the inventor discovers there exists at least the following technical problems: since storage locations of video files are not uniform and there may exist some error information in a user's memory, if the user wants to find a storage location of a video file to be played only through memory, there is little possibility to precisely find it once for all and the operation procedure for finding the storage location of the video file is also cumbersome.

### SUMMARY

In order to solve the problems that there is little possibility to find storage location of a video file to be played once for all and the operation procedure of finding the storage location of the video file from memory is cumbersome, embodiments of the present disclosure provide a method, an apparatus for creating a virtual directory and an electronic device. The technical solutions are provided as below.

According to a first aspect of the present disclosure, there is provided a method for creating a virtual directory, including: receiving request information for creating a virtual directory for a file of the designated type; after the request information for creating a virtual directory for a designated display region is received, traversing the files of the designated type in a designated storage region; extracting attribute information of the traversed files of the designated type, the attribute information including first attribute information containing a name and a play address or second attribute information containing a name and information on episode, or third attribute information containing a name, a play address, information on episode; and creating a virtual directory according to the attribute information on the files of the designated type.

According to a second aspect of the present disclosure, there is provided an apparatus for creating a virtual directory, including: a traversing module configured to traverse files of the designated type in a storage region; an extraction module configured to extract attribute information of the files of the designated type traversed in the traversing module 901, the attribute information including the previous two or all of names, play addresses, information on episode of the files of the designated type; and a virtual directory creation module configured to create a virtual directory according to the attribute information on the files of the designated type extracted in the extraction module.

According to a third aspect of the present disclosure, there is provided an electronic device comprising the apparatus for creating a virtual directory provided according to the second aspect.

The technical solutions produced by the embodiments of the present disclosure have the following advantages.

The present disclosure, by acquiring files with all designated types in a designated storage region and creating a virtual directory according to attribute information of the acquired files of the designated type, may solve problems that due to the irregular storage locations of video files in the prior art, there is little possibility to find storage location of a video file to be played once for all and the operation procedure of finding the storage location of the video file from memory is cumbersome. Also, all of the files with the same designated type in respective partitions of an electronic device and external devices are placed uniformly in a virtual directory, and thus the desired file of the designated type may be directly found in the virtual directory, thereby realizing the quick finding of the desired file of the designated type.

It should be understood that the above general description and the detailed description below are merely exemplary, and do not limit the present disclosure.

### BRIEF DESCRIPTION OF THE DRAWINGS

The appending drawings which is incorporated into the description and constitutes a part of the present description, illustrates embodiments of the present application, and is used for explaining the principle of the present application together with the description.
Fig.1 is a diagram showing an environment related to a method for creating a virtual directory according to an exemplary embodiment of the present application;
Fig.2 is a flowchart showing a method for creating a virtual directory according to an exemplary embodiment of the present application;
Fig.3 is a flowchart showing a method for creating a virtual directory according to an exemplary embodiment of the present application;
Fig.4 is a schematic diagram showing an arrangement of a virtual directory according to an exemplary embodiment of the present application;
Fig.5 is a flowchart showing a method for creating a virtual directory according to an exemplary embodiment of the present application;
Fig.6 is a diagram showing a virtual directory according to an exemplary embodiment of the present application;
Fig.7 is a diagram showing a display region according to an exemplary embodiment of the present application;
Fig.8 is a diagram showing a flow of playing an electronic card on demand in a virtual directory according to an exemplary embodiment of the present application;
Fig.9 is a block diagram showing an apparatus for creating a virtual directory according to an exemplary embodiment of the present application;
Fig. 10 is a block diagram showing an apparatus for creating a virtual directory according to an exemplary embodiment of the present application; and
Fig. 11 is a block diagram showing an electronic device according to an exemplary embodiment of the present application.

### DETAILED DESCRIPTION

In order to clarify the objects, technical solution and advantages of the present disclosure, the embodiments of the present disclosure will be described in detail with reference to the appending drawings hereinafter.

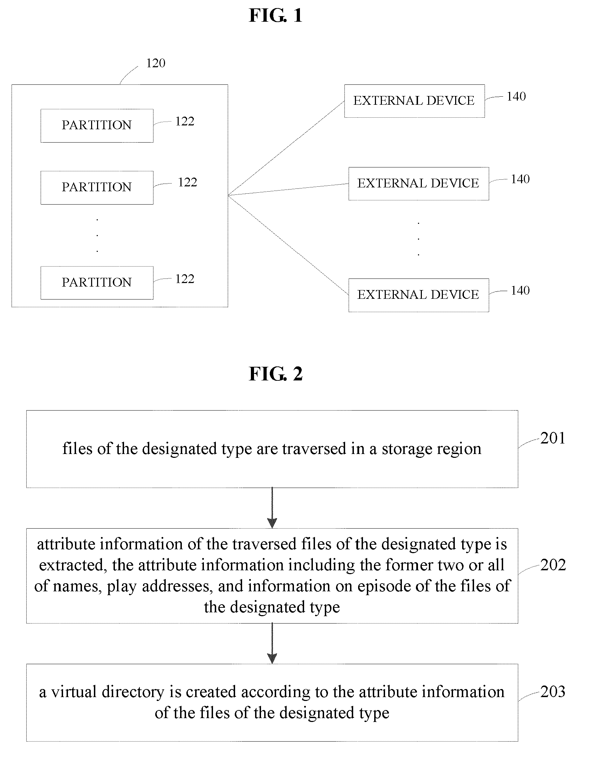

Referring to Fig.1, it illustrates an implementation environment related to a method for creating a virtual directory according to a part of the exemplary embodiments of the present application. The implementation environment includes an electronic device 120 and at least one external device 140 connected with each other.

The electronic device 120 includes, but is not limited to, computer, smart phone, multimedia television, MP4 (Moving Pictures Experts Group-4) player, and so on. The electronic device 120 may include at least one partition 122 in which various type of files may be stored, for example, each of the partitions 122 may store video files, audio files, and/or document files, and so on.

The external device 140 may be a mobile hard disk and a USB flash disk externally connected to the electronic device 120 or a network shared device in the same local network as the electronic device 120. A player in the electronic device 120 may play a video file or an audio file in the external device 140.

Referring to Fig.2, it illustrates a flow of a method for creating a virtual directory according to an exemplary embodiment of the present disclosure. The method for creating a virtual directory may be implemented by the electronic device 120 in the implementation environment shown in Fig.1. The method for creating a virtual directory may include the following steps 201-203.

In step 201, files of a designated type are traversed in a storage region.

The files of the designated type may include a video file, an audio file and/or a document file, and so on.

Here, the storage region may be all of the partitions in an electronic device and all of external devices by default, and may also be a storage region designated by a user, such as a part of partitions in the electronic device or a part of the external devices through designation, and so on. For example, the storage region may be respective partitions in the electronic device 120 shown in Fig.1 and a storage region in the external device 140 externally connected to the electronic device 120. For another example, one or more partitions in the electronic device 120 may be selected as the storage region by a user as desired and/or one or more external devices 140 may be selected as the storage region. For example, when a user wants to view a video file in a designated external device, the user may set the external device as the storage region, and in this case, it is required to traverse the designated external device to obtain the video file.

In an embodiment of the present disclosure, when the storage region includes a plurality of external devices and a plurality of partitions of an electronic device, or at least one external device and at least one partition of an electronic device, the files of the designated type may be traversed in the storage region according to a predetermined traversal path. For example, when the storage region includes a first external device and a second external device, the predetermined traversal path may be set as "the first external device->the second external device", and in this case, the files of the designated type may be firstly traversed in the first external device, and then the files of the designated type may be traversed in the second external device. For another example, when the storage region includes a partition D and a partition E in an electronic device, and a first external device and a second external device, the predetermined traversal path may be set as "the partition D in the electronic device ->the partition E in the electronic device->the first external device->the second external device", and in this case, the partition D in the electronic device is firstly traversed, then the partition E is traversed, subsequently the first external device is traversed, and finally the second external device is traversed.

In step 202, attribute information of the traversed files of the designated type is extracted, the attribute information including the former two or all of names, play addresses, and information on episode of the files of the designated type.

When the files of the designated type includes video files, the attribute information of the files of the designated type may include names and play addresses of the files of the designated type, or names, play addresses and information on episode of the files of the designated type, or the like.

For example, when one of the video files is a movie, the attribute information of the video file may include a name and a play address of the movie. For another example, when one of the video files is a certain episode of a teleplay, the attribute information of the video file may include a name of the teleplay, a play address of the video file, and information on episode indicating which episode of the teleplay the video file is.

It should be noted that the play address mentioned above is a storage path where the video file is located in respective partitions of the electronic device 120 or the external device 140.

In step 203, a virtual directory is created according to the attribute information of the files of the designated type.

In an embodiment of the present disclosure, a user may create a virtual directory for the file of the designated type as desired, for example, the user may create a virtual directory for video files, may create a virtual directory for audio files, and may also create a virtual directory for document files. It should be understood that the user may create a virtual directory for other type of files.

In an embodiment of the present disclosure, the creating a virtual directory according to the attribute information of the file of the designated type may include:
Classifying the attribute information with the same name into a classification;
When there is one piece of attribute information in the classification, determining the attribute information as a node in a first-level directory of the virtual directory, the node including names and play addresses of the files of the designated type corresponding to the attribute information;
When there are at least two pieces of attribute information in the classification and the attribute information includes information on episode, generating a node in the first-level directory for the classification, the node including at least names of the files of the designated type corresponding to the attribute information in the classification; and
Determining the respective attribute information in the classification as sub nodes in a second-level directory of the virtual directory under the node in the first-level directory, respectively, the sub nodes including names, play addresses, and information on episode of the files of the designated type corresponding to the attribute information.

In an embodiment of the present disclosure, the generating a node in the first-level directory for the classification includes:
Creating a node corresponding to the classification in the first-level directory;
Determining a name in the attribute information in the classification as a name of the node in the first-level directory;
Determining the number of the attribute information in the classification as information on a total number of episodes in the node in the first-level directory; and
Determining the name and information on the total number of episodes as contents included in the node.

In an embodiment of the present disclosure, the method according to the present disclosure may further include:
Creating an electronic card for a node in the first-level directory according to the attribute information corresponding to the node; and
Displaying in a designated display region the electronic card corresponding to the node in the first-level directory.

In an embodiment of the present disclosure, the displaying in a designated display region the electronic card corresponding to the node in the first-level directory may include:
Acquiring poster information of the files of the designated type corresponding to the node in the first-level directory, the poster information being a picture indicating contents of the files of the designated type;
Adding the poster information to the electronic card corresponding to the node; and
Displaying in a designated display region the electronic card added with the poster information and corresponding to the node.

In an embodiment of the present disclosure, the node in the first-level directory further includes a category of the files of the designated type corresponding to the attribute information corresponding to the node, and the method further includes:
Acquiring a displaying request containing a designated category;

The creating an electronic card for the node according to the attribute information corresponding to the node in the first-level directory includes:

Selecting in the first-level directory a node corresponding to the attribute information containing the designated category;
Creating the electronic card for the selected node according to the attribute information corresponding to the selected node;

The displaying in a designated display region an electronic card corresponding to the node in the first-level directory includes:
Displaying an electronic card corresponding to the selected node in the designated display region.

In an embodiment of the present disclosure, the attribute information further includes a category of the files of the designated type, and the method further includes:
Acquiring a displaying request containing a designated category; and
Deleting an electronic card displayed in the designated display region and corresponding to attribute information without the designated category.

In an embodiment of the present disclosure, the method according to the embodiment of the present disclosure may further include:
Receiving a playing request generated when a user selects an electronic card in the designated display region, the playing request including attribute information corresponding to the electronic card;
When the attribute information in the playing request contains a play address, sending a play address in the attribute information corresponding to the electronic card to a player, so that the player can play files of the designated type corresponding to the electronic card according to the play address in the attribute information; and
When the attribute information in the playing request doesn't contain a play address, sending play addresses in attribute information of all of sub nodes of the node corresponding to the electronic card to a player, so that the player can play, according to the play addresses in the attribute information of the sub nodes, files of the designated type corresponding to the sub nodes.

Accordingly, by acquiring all of files with a designated type in a designated storage region and creating a virtual directory according to attribute information of the acquired files of the designated type, the method for creating a virtual directory according to the embodiments of the present disclosure may solve problems in the prior art that occurred due to the nonuniform storage locations of video files, in which there is little possibility to find storage location of a video file to be played once for all and the operation procedure of finding the storage location of the video file from memory is cumbersome. Also, all of the files with the same designated type in respective partitions of an electronic device and external devices are placed uniformly in a virtual directory, and thus the desired files of the designated type may be directly found in the virtual directory, thereby realizing a quick finding of the desired files of the designated type.

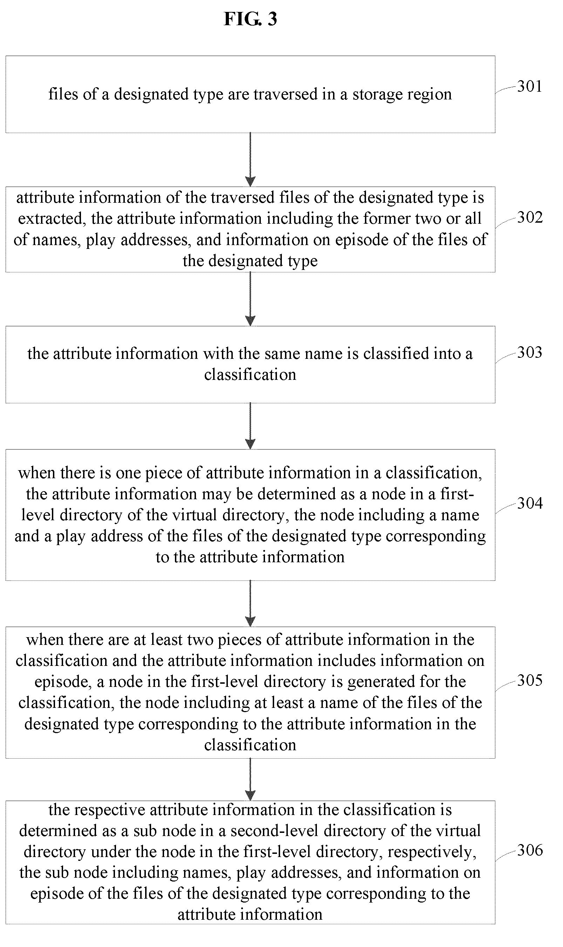

Referring to Fig.3, it illustrates a flow of a method for creating a virtual directory according to an exemplary embodiment of the present disclosure. The method for creating a virtual directory may be implemented by the electronic device 120 in the implementation environment shown in Fig.1. The method for creating a virtual directory may include the following steps 301-306.

In step 301, files of a designated type are traversed in a storage region.

The files of the designated type may incude a video file, an audio file and/or a document file, and so on.

Here, the storage region may be all of the partitions in an electronic device and all of external devices by default, and may also be a storage region designated by a user, for example, a part of partitions in the electronic device or a part of the external devices through designation, and so on. For example, the storage region by default may be respective partitions in the electronic device 120 shown in Fig.1 and a storage region in the external device 140 externally connected to the electronic device 120. For another example, one or more partitions in the electronic device 120 may be selected by a user as the storage region as desired and/or one or more external devices 140 may be selected as the storage region as desired.

In an embodiment of the present disclosure, when the storage region includes a plurality of external devices and a plurality of partitions of an electronic device, or at least one external device and at least one partition of the electronic device, the files of the designated type may be traversed in the storage region according to a predetermined traversal path. For example, when the storage region includes a first external device and a second external device, the predetermined traversal path may be set as "the first external device->the second external device", and in this case, the files of the designated type may be firstly traversed in the first external device, and then the files of the designated type may be traversed in the second external device.

In step 302, attribute information of the traversed files of the designated type is extracted, the attribute information including the former two or all of names, play addresses, and information on episode of the files of the designated type.

Apparently, the attribute information of the files of the designated type may be different depending on different types files of the designated type, and thus the attribute information of the files of the designated type may be determined according to the type of the files of the designated type. For example, attribute information of a txt file may include a name, a size, a creating time of the file, and so on. For another example, attribute information of an audio file may include a format and a name of the audio file, and so on.

Here, taking a video file for an example of the designate type of file, the attribute information of the files of the designated type may include a name and a play address of the files of the designated type, or a name, a play address and information on episode of the files of the designated type, or the like.

For example, when the video file is a movie, the attribute information of the video file may include a name and a play address of the movie. For another example, when the video file is a certain episode of a teleplay, the attribute information of the video file may include a name of the teleplay, a play address of the video file, and information on episode indicating which episode of the teleplay the video file is.

It should be noted that the play address mentioned above is a storage path where the video file is located in respective partitions of the electronic device 120 or the external device 140.

After the attribute information of the designate type of files is acquired, a virtual directory related to these designated types may be created according to the attribute information of the designate type of files, and the detailed processing may refer to steps 303 to 306.

In step 303, the attribute information with the same name is classified into a classification;
After the attribute information of all of the files of the designated type is acquired, all of the attribute information may be classified according to the names in the attribute information, i.e. the attribute information with the same name may be classified into a classification.

For example, if a name in attribute information 1 is "Strive" and a name in attribute information 2 is also "Strive", the attribute information 1 and the attribute information 2 may be classified into a classification.

Apparently, when a name in the attribute information is different from names in other attribute information, the former attribute information may be classified into one classification, i.e. this classification only contains a unique attribute information.

For example, when a plurality of video files in a same teleplay are acquired through the traversal (in a case that the teleplay includes a plurality of episode video files), the names of the plurality of video files are a name of the teleplay, and the plurality of the video files may be classified into a classification. Further, for example, when a plurality of video files in a same movie are acquired through the traversal (in a case that the movie includes a plurality of segment video files), the names of these video files are a name of the movie, and thus the video files may be classified into a classification.

In step 304, when there is one piece of attribute information in a classification, the attribute information may be determined as a node in a first-level directory of the virtual directory, the node including a name and a play address of the files of the designated type corresponding to the attribute information;

When there is one piece of attribute information in a classification, this indicates that no other attribute information has a same name as that of the attribute information, and the files of the designated type (that is a video file) corresponding to the attribute information may be determined as a movie having a single video or one individual episode of a teleplay. In this case, the attribute information may be determined as a node in the first-level directory in the virtual directory, and correspondingly, the node may include a name and a play address of the files of the designated type corresponding to the attribute information.

In other word, when the attribute information is directly determined as a node in the first-level directory of the virtual directory, the node corresponds to a movie having a single video and one individual episode of a teleplay, and in this case, the node may include a name and a play address of the corresponding video file (a movie having a single video and one individual episode of a teleplay).

In step 305, when there are at least two pieces of attribute information in the classification and the attribute information includes information on episode, a node in the first-level directory is generated for the classification, the node including at least a name of the files of the designated type corresponding to the attribute information in the classification.

When the file of the designated type is one segment of video file in the movie, the information on episode in the attribute information of the file of the designated type may be which segment of the movie the file of the designated type is. When the file of the designated type is one episode of video file in a teleplay, the information on episode in the attribute information of the file of the designated type may be which episode of the teleplay the file of the designated type is.

When there are at least two pieces of attribute information in the classification and the attribute information includes information on episode (indicating which episode of a teleplay the file of the designated type corresponds to, or which segment of the movie the file of the designated type corresponds to), this indicates that these attribute information are the attribute information of a plurality of segment video files in the same movie or the attribute information of a plurality of episode video files in the same teleplay, and in this case, a node may be generated in the first-level directory of the virtual directory for these attribute information, and the node may include at least a name of the file of the designated type corresponding to these attribute information.

In an embodiment of the present disclosure, the procedure of generating a node in the first-level directory for the classification may include the following steps.

Firstly, a node corresponding to the classification is created in the first-level directory;
Secondly, a name in the attribute information in the classification is determined as a name of the node in the first-level directory;
Thirdly, a number of the attribute information in the classification is determined as information on a total number of episodes in the node in the first-level directory;
Fourthly, the name and the information on the total number of episodes are determined as contents included in the node.

That is, when a node is created in a first-level directory for a classification, the node may include a name which is a name in the attribute information in the classification, and information on a total number of episodes which indicates the total number of the attribute information in the classification. For example, when there are twenty video files with a same name, the twenty video files may be generally determined as video files corresponding to a certain teleplay, and in this case, a node which indicates this teleplay and includes a name and information on the total number of episodes (20 episodes) of the teleplay, is generated in a first-level directory for the twenty video files.

In step 306, the respective attribute information in the classification is determined as a sub node in a second-level directory of the virtual directory under the node in the first-level directory, respectively, the sub node including names, play addresses, and information on episode of the files of the designated type corresponding to the attribute information.

That is, after a node is created in a first-level directory for a plurality of attribute information in the same classification, these attribute information need to be added to the node so as to serve as sub nodes of the node, i.e. the respective attribute information in the classification are respectively determined as sub nodes in the second-level directory of the virtual directory under the node in the first-level directory, and correspondingly, the sub nodes may include names, play addresses and information on episode, respectively, of the files of the designated type corresponding to the attribute information.

For example, when a teleplay contains a plurality of episode video files, the attribute information of each of the episode video files include a name, a play address and information on episode of the teleplay, and in this case, a node including a name and information on a total number of episodes of the teleplay may be created in a first-level directory for the teleplay. Then, sub nodes are generated in a second-level directory under the node for the plurality of episode video files, and the sub nodes may include a name of the teleplay, play addresses of each of the plurality of episode video files, and information on episode indicating which episode each of the episode video files is. Further, for another example, when a movie includes a plurality of segment video files, the attribute information of each of the segment video files includes a name, a play address and information on episode of the movie, and in this case, a node which may include a name and information on a total number of episodes of the movie may be generated in a first-level directory for the movie. Then, sub nodes may be generated in a second-level directory under the node for the plurality of segment video files, and the sub nodes may include a name of the movie, play addresses of each of the segment video files, and information on episode indicating which segment each of the segment video files is. Further, for yet another example, when a video file is a movie having a single video file, a node which includes a name and a play address of the movie may be created in a first-level directory for the movie. For still another example, when there is only one individual video file of a teleplay type (for example, there is only one individual video file of a teleplay type in the traversed storage region, and the video file has a name different from that of other video files), a node may be created in the first-level directory for the video file, and may include a name, a play address and information on episode of the video file.

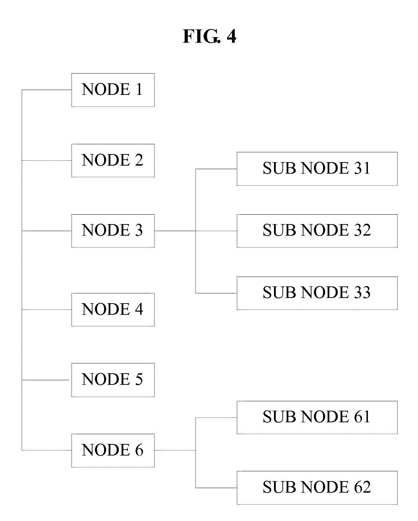

Referring to Fig.4, it illustrates a schematic diagram of an arrangement of a virtual directory according to an embodiment of the present disclosure. The virtual directory may contain a first-level directory and a second-level directory. The first-level directory may include a node related to a single video file of a movie type, a node related to a movie collection, a node related to a teleplay collection, and a node related to an individual video file of a teleplay type. When the first-level directory is a node related to a movie collection, sub nodes related to a plurality of segment video files in the movie collection may be contained in a corresponding second-level directory. When the first-level directory is a node related to a teleplay collection, sub nodes related to a plurality of episode video files in the teleplay collection may be contained in a corresponding second-level directory. For example, in Fig.4, a second-level under a node 3 contains a sub node 31, a sub node 32, and a sub node 33, and if the node 3 is a node related to a teleplay collection, the sub node 31, the sub node 32, and the sub node 33 may correspond to three episode video files of the teleplay under the node 3, respectively. For another example, in Fig.4, a second-level under a node 6 contains a sub node 61 and a sub node 62, and if the node 6 is a node related to a movie collection, the sub node 61 and the sub node 62 may correspond to a first segment movie and a second segment movie under the node 6, respectively.

In an embodiment of the present disclosure, nodes in a first-level directory of the virtual directory may be arranged randomly, and may be also arranged according to a predetermined rule. For example, the nodes may be arranged chronologically according to time corresponding to each of the nodes, or be arranged in an order that a movie is prior to a teleplay. The embodiment is not limited to the above order of the electronic cards in the first-level directory.

It should be noted that, when there is not a same name among the attribute information of the traversed video files, this indicates that there is only a movie and/or a teleplay with a single episode, and in this case, the created virtual directory only contains a first-level directory. In addition, when all of video files are traversed in the storage region, the virtual directory created according to the video files is unique. If the storage region includes one or more external devices, the created virtual directory is not changed as long as the one or more external devices are connected. If the storage region is changed, it is required to traverse files of the designated type in the changed storage region again, and a new virtual directory may be created according to the newly acquired files of the designated type through traversal.

Accordingly, by acquiring all of the files of the designated type in a designated storage region and creating a virtual directory including a first-level directory and a second-level directory according to attribute information of the acquired files of the designated type, the method for creating a virtual directory according to the embodiments of the present disclosure may solve problems in the prior art that caused by the nonuniform storage locations of video files, in which there is little possibility of finding storage location of a video file to be played once for all and the operation procedure of finding the storage location of the video file from memory is cumbersome. Also, all of the files of the same designated type in respective partitions of an electronic device and external devices are uniformly placed in a virtual directory, and thus the desired file of the designated type may be directly found in the virtual directory, thereby realizing a quick finding of the desired file of the designated type.

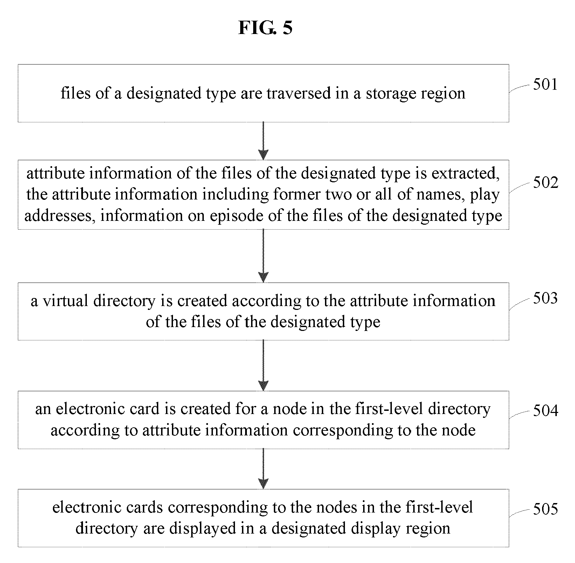

Generally, in order to facilitate a user to view a desired video file in the virtual directory, the virtual directory may be displayed. Referring to Fig.5, it illustrates a flow of a method for creating a virtual directory according to another exemplary embodiment of the present disclosure. The method for creating a virtual directory may be implemented by the electronic device 120 in the implementation environment shown in Fig.1. The method for creating a virtual directory may include the following steps 501-505.

In step 501, files of a designated type are traversed in a storage region.

The files of the designated type may include a video file, an audio file and/or a document file, and so on.

Here, the storage region may include all of partitions in an electronic device and all of external devices by default, and may also be a storage region designated by a user, for example, a part of partitions in a designated electronic device or a part of the external devices, and so on.

In an embodiment of the present disclosure, when the storage region includes a plurality of external devices and a plurality of partitions of an electronic device, or at least one external device and at least one partition of an electronic device, the files of the designated type are traversed in the storage region according to a predetermined traversal path. For example, when the storage region includes a first external device and a second external device, the predetermined traversal path may be set as "the first external device->the second external device", and in this case, the files of the designated type may be firstly traversed in the first external device, and then the files of the designated type may be traversed in the second external device.

In step 502, attribute information of the files of the designated type is extracted, the attribute information including former two or all of names, play addresses, information on episode of the files of the designated type.

Obviously, the attribute information of the files of the designated type is also different with different types of the files of the designated type, and thus the attribute information of the files of the designated type is determined according to the type of the files of the designated type. For example, the attribute information of a txt format file may include a name, a size, a creating time of the file, and so on. For another example, the attribute information of an audio file may include a format and a name of the audio file, and so on.

Here, taking an audio file for an example of a file of the designated type, the attribute information of the file of the designated type may include a name and a play address of the file of the designated type, or a name, a play address and information on episode of the file of the designated type, or the like.

For example, when a video file is a movie, the attribute information of the video file may include a name and a play address of the movie. For another example, when a video file is a certain episode in a teleplay, the attribute information of the video file may include a name of the teleplay, a play address of the video file, and information on episode indicating which episode of the teleplay the video file is.

It should be noted that the play address mentioned herein is a actual storage path where the video file is located in respective partitions of the electronic device 120 or the external device 140.

In step 503, a virtual directory is created according to the attribute information of the files of the designated type.

In an embodiment of the present disclosure, the creating a virtual directory according to the attribute information of the files of the designated type may include: classifying the attribute information with a same name into a classification; when there is one piece of attribute information in the classification, determining the attribute information as a node in a first-level directory of the virtual directory, the node including a name and a play address of a file of the designated type corresponding to the attribute information; when there are at least two pieces of attribute information in the classification and the attribute information includes information on episode, generating a node in the first-level directory for the classification, the node including at least a name of files of the designated type corresponding to the attribute information in the classification; and determining the respective attribute information in the classification as sub nodes in a second-level directory of the virtual directory under the node in the first-level directory, respectively, the sub nodes including names, play addresses, and information on episode of the files of the designated type corresponding to the attribute information.

In step 504, an electronic card is created for a node in the first-level directory according to attribute information corresponding to the node.

The electronic card is a card displayed in a display region so as to be viewed or selected by a user. Generally, a name of a video file or a name and information on episode of a video file may be displayed on the electronic card, and the electronic card generally corresponds to a play address of a corresponding video file.

The nodes in a first-level directory may be divided into various types. One of them may be a node related to a single video file of a movie type, the attribute information of which includes a name and a play address of a movie, and in this case, an electronic card which may include a name, a play address, and information on episode (for example, indicating which segment) of the movie may be created for the node. Another one may be a node related to a movie collection, which includes a name of the movie and information on a total number of episodes, and in this case, an electronic card which may include the name and the information on the total number of episodes of the movie collection may be created for the node. A still another node may be a node related to a teleplay collection, which includes a name and information on a total number of episodes of the teleplay and in this case, an electronic card which may include the name and the information on the total number of episodes of the teleplay collection may be created for the node. A further another node may be a node related to an individual video file of a teleplay type, the attribute information of which includes a name of the teleplay, a play address of the individual video file and information on respective episodes (for example, indicating which episode) of the individual video file, and in this case, an electronic card which may include a name of the teleplay and a play address of the individual file may be created for the node.

It should be noted that, in order to allow a user to distinguish between a movie and a teleplay in the video files, information on a total number of episodes may be set in the electronic card related to a teleplay collection or a movie collection. As a result, a user may preliminarily judge whether an electronic card corresponds to a movie or a teleplay, according to displayed information on the total number of episodes. For example, if there is no information on the total number of episodes or information on respective episodes displayed in an electronic card, it may be preliminarily determined that the electronic card corresponds to a movie. For another example, if there is information on the total number of episodes displayed in an electronic card and the value of the information on the total number of episodes is larger than a predetermined threshold (for example, 10, since a teleplay may contain relative many episodes), it may be preliminarily determined that the electronic card corresponds to a teleplay. For yet another example, if there is information on the total number of episodes displayed in an electronic card and the value of the information on the total number of episodes is smaller than a predetermined threshold (for example, 10, since a movie may contain relative few segments), it may be preliminarily determined that the electronic card corresponds to a movie. Further, for example, if there is information on respective episodes displayed in an electronic card, it may be preliminarily determined that the electronic card corresponds to an individual episode of a teleplay or a segment of a movie.

In step 505, electronic cards corresponding to the nodes in the first-level directory are displayed in a designated display region.

The designated display region may be a display region for displaying a virtual directory in the electronic device 120, and the display region may be further used for displaying electronic cards in the first-level directory of the virtual directory.

It should be noted that, in practical application, electronic cards may be created for sub nodes in the second-level directory according to the attribute information corresponding to the sub nodes. In this case, in the displayed first-level directory, when a user clicks an electronic card in the first-level directory having sub nodes, electronic cards of the sub nodes in the second-level directory may be displayed.

In a possible embodiment, in order to facilitate a user to know about contents of a video file corresponding to an electronic card more intuitively, poster information indicating the contents of a corresponding video file may be provided for the electronic card when it is created.

That is, the displaying in a designated display region electronic cards corresponding to nodes in the first-level directory may include:
Firstly, poster information of a file of the designated type corresponding to a node in the first-level directory is acquired, the poster information including a picture indicating contents of the file of the designated type.

The file of the designated type corresponding to an electronic card in a first-level directory of a virtual directory may be a movie file, and may be also a teleplay file. In order to provide presentation contents of the movie file and the teleplay file to a user more intuitively, generally, a multimedia producer may previously design poster information for a file of the designated type (such as a movie file and a teleplay file), which is used for presenting contents of the file of the designated type (such as a movie file and a teleplay file).

In practical application, when an electronic device creates an electronic card, the electronic device may acquire poster information on a file of the designated type from a related server. If there is no poster information on the file of the designated type in the server, a frame of image may be acquired from video data in the file of the designated type, and used as the poster information of the file of the designated type.

Apparently, if no poster information on a file of the designated type is acquired from a server and a frame of image of the file of the designated type is not acquired due to some reasons, an image, which indicates that there is no official poster information on the file of the designated type, may be set as the poster information on the file of the designated type.

For example, when a node in the first-level directory corresponds to a movie, poster information on the movie may be acquired. When a node in the first-level directory corresponds to a teleplay, poster information on the teleplay may be acquired. In practical application, the poster information corresponding to a movie or a teleplay may be acquired from a server providing the movie or the teleplay. Correspondingly, when it is required to create an electronic card for a sub node in the second-level directory, a frame of image may be selected from a video file corresponding to a sub node to serve as poster information of the sub node.

Secondly, the poster information is added to the electronic card corresponding to the node.

Generally, in order to allow a user to preliminarily find a desired video file to be played, a name of the video file may be added to a corresponding electronic card, so that the user may find and confirm the video file according to the name on the electronic card. However, since it is slower to find a video file by reviewing names on electronic cards one by one and it is less intuitive than poster information, the acquired poster information may be added to the electronic card so as to facilitate the user to find the desired video file to be played more quickly.

Thirdly, the electronic card added with the poster information and corresponding to the node is displayed in a designated display region.

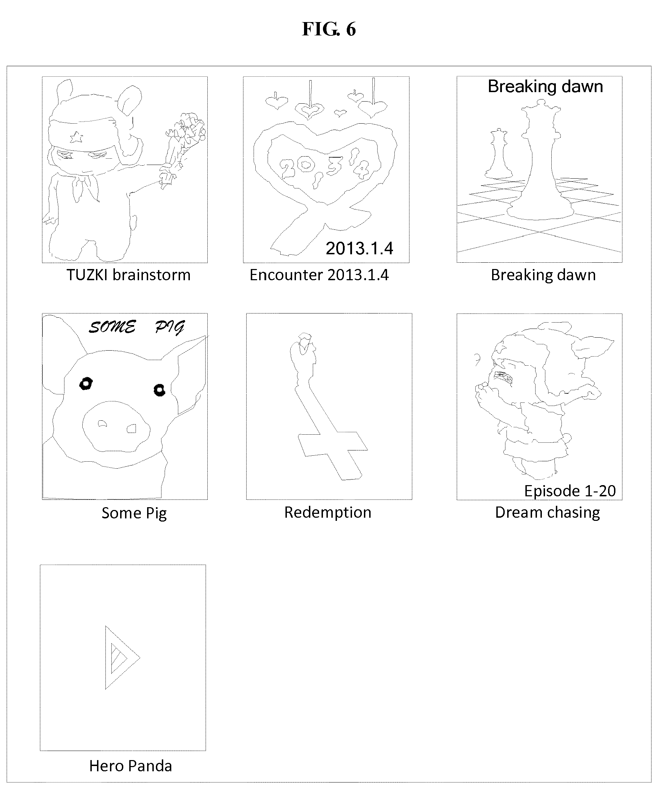

Referring to Fig.6, it illustrates a diagram of a virtual directory displayed according to an embodiment of the present disclosure. After an electronic card in the first-level directory is added with poster information, the electronic card added with the poster information may be displayed in a designated display region. Referring to Fig.6, a plurality of electronic cards with poster information are displayed in sequence, and each of the electronic cards displays poster information, and a name of a video file corresponding to the node may be displayed under the poster information or at other position. The last electronic card in Fig.6 may not acquire a official released poster information, and in this case, an image indicating that there is no official poster information on the file of the designated type may server as poster information to be displayed.

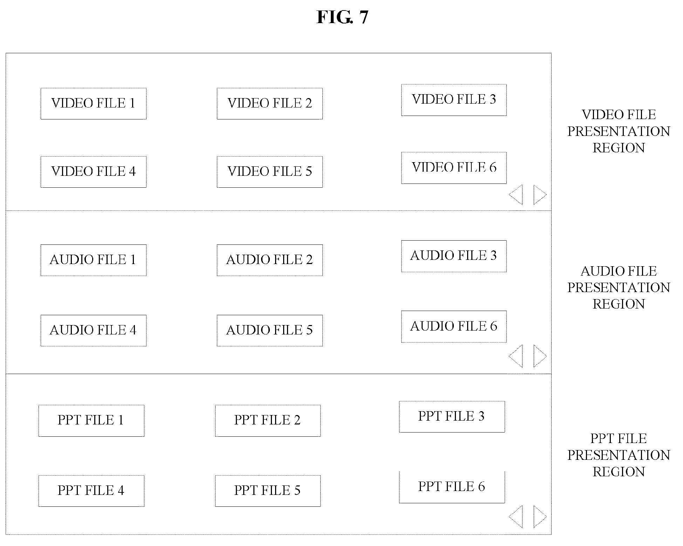

In an embodiment of the present disclosure, a user may create a virtual directory for files of the designated type as desired. For example the user may create a virtual directory for video files, may create a virtual directory for audio files, and may create a virtual directory for document files. Certainly, the user may create a virtual directory for other type of files. Since a user may create a plurality of virtual directories for various types of files, when two or more virtual directories are created, different virtual directories may be respectively displayed in different locations of a display region, i.e. different virtual directories are respectively displayed in different designated display regions. That is, the designated display region may include a part of the display region displaying the virtual directories. Referring to Fig.7, it illustrates a diagram of a display region according to an embodiment of the present disclosure. For example, a virtual directory of video files is displayed in a designated display region (a video presentation region) among display regions, a virtual directory of audio files is displayed in another designated region (audio presentation region) among the display regions, and a virtual directory of PPT format files is displayed in a still another designated region (PPT file presentation region) among the display regions. When there are a lot of electronic cards in a designated display region, since each designated display region may be limited by a size of the electronic device, a page turn button such as a page-up button and a page-down button may be set in the designated display region. If the electronic device is a touch screen device, a user may perform a page turn in each of the designated display regions by touching the screen. Preferably, when a user wants to view contents in one of the presentation regions, contents in other presentation regions may be temporarily hidden, and when the user wants to view contents in one of the hidden presentation regions, the contents in the hidden presentation region may appear and be displayed.

It should be noted that, after video files in a storage region are traversed, the virtual directory created according to the video files is unique, and if the storage region includes one or more external devices, the created virtual directory may be not changed as long as the one or more external devices are connected. If the storage region is changed, it is required to traverse the files of the designated type again in the storage region, and create a new virtual directory according to the newly traversed files of the designated type.

In an embodiment, when electronic cards are displayed, in order to avoid the excessive displaying of the electronic cards, a user may select to display only a designated category of electronic cards as desired. For example, the user may select to display only movies or display only teleplays, and correspondingly, the electronic device may acquire a displaying request containing a designated categoray which may be selected by the user, such as containing "movies" or "teleplays". Accordingly, the step 504 may include: selecting a node corresponding to attribute information containing a designated category in the first-level directory, and creating an electronic card for the selected node according to the attribute information corresponding to the selected node, i.e. creating the electronic card only for a node with the designated category in the first-level directory, for example, creating an electronic card only for a node in the first-level directory related to movies, or creating an electronic card only for a node in the first-level directory related to teleplays. Correspondingly, the step 505 may further include: displaying in a designated display region the electronic card corresponding to the selected node. Accordingly, when a user select to display only a designated category of electronic card, an electronic card may be created only for a node with the designated category in a first-level directory, and the created electronic card may be displayed. Here, the designated category of the files of the designated type may be acquired from a related server.

In another possible embodiment, a user may not select to display a part of electronic cards with designated category at the beginning of displaying the electronic cards in the first-level directory, and when the user finds there are relative many electronic cards displayed, the user may select to display only electronic cards related to movies if the user only wants to view a movie. However, since the electronic device has created electronic cards for all of the movies and teleplays in the first-level directory, it is not required to create electronic cards for the movies again, and it is only required to delete displayed electronic cards related to the teleplays. Thus, when a user requests to display a designated category of electronic card, the electronic device 120 may acquire a displaying request containing the designated category, and deletes electronic cards displayed in the designated display region and corresponding to attribute information without the designated category. Apparently, in order to better display the remaining electronic cards related to the designated category, the vacant locations occupied by the deleted electronic cards may be also deleted from the designated display region, and only the electronic cards related to the designated category may retain in the designated display region.

Accordingly, by acquiring all files of a designated type of in a designated storage region, creating a virtual directory containing a first-level directory and a second-level directory according to attribute information of the acquired files of the designated type, providing a corresponding poster information for electronic cards in the first-level directory, and displaying in a designated display region the electronic cards with poster information in the first-level directory, the method for creating a virtual directory according to the embodiments of the present disclosure may solve problems caused by the nonuniform storage locations of video files in the prior art, in which there is little possibility of finding storage location of a video file to be played one time and the operation procedure of finding the storage location of the video file from memory is cumbersome. Also, since all of the files with a same designated type in respective partitions of an electronic device and external devices are uniformly placed in a virtual directory, the desired file of the designated type may be directly found in the virtual directory, and since an electronic card to be played may be added with poster information, the desired electronic card may be more intuitively found by a user, thereby realizing a quick finding of the desired file of the designated type.

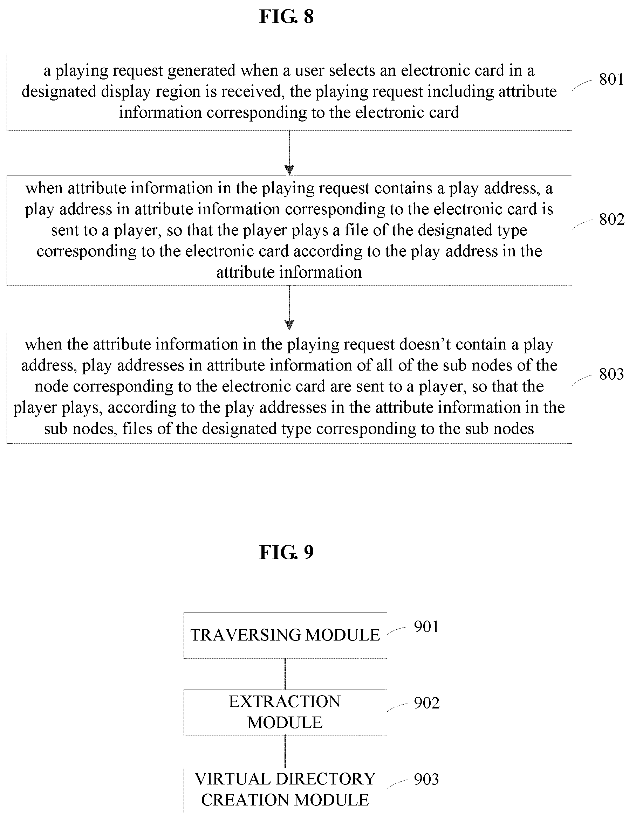

In a possible embodiment, after the created first-level directory of the virtual directory is displayed in a designated display region, if a user wants to play a video file corresponding to an electronic card in the virtual directory, the user may select the electronic card to be played in the first-level directory of the virtual directory. Referring to Fig.8, it is a flowchart of playing an electronic card on demand in a virtual directory according to an embodiment of the present disclosure. The process of playing an electronic card on demand in a virtual directory may include:
Step 801, a playing request generated when a user selects an electronic card in a designated display region is received, the playing request including attribute information corresponding to the electronic card;
A user may select a movie or a teleplay to be played in the first-level directory according to the displayed first-level directory. When a user selects an electronic card in the first-level directory, the electronic device 120 may receive a playing request for playing a video file corresponding to the electronic card.

Step 802, when attribute information in the playing request contains a play address, a play address in attribute information corresponding to the electronic card is sent to a player, so that the player plays a file of the designated type corresponding to the electronic card according to the play address in the attribute information.

When the attribute information in the playing request contains a play address, this indicates that the electronic card selected by the user corresponds to an individual video file of a movie type or an individual video file of a teleplay type, and in this case, the attribute information of the video file may be directly sent to a player, so that the player plays the corresponding video file according to the play address in the attribute information. Generally, when the attribute information in the playing request contains a play address, the play address in the attribute information corresponding to the electronic card may be sent to a player, or the play address and a name in the attribute information corresponding to the electronic card (i.e. in a case that the electronic card corresponds to an individual video file of a movie type), or the play address, the name and information on respective episodes in the attribute information (i.e. in a case that the electronic card corresponds to an individual video file of a teleplay type) may be sent to a player, so that the player plays a corresponding video file according to the play address, and displays the name of the video file or displays the name and information on respective episodes of the video file during the playing.

Step 803, when the attribute information in the playing request doesn't contain a play address, play addresses in attribute information of all of the sub nodes of the node corresponding to the electronic card are sent to a player, so that the player plays, according to the play addresses in the attribute information in the sub nodes, files of the designated type corresponding to the sub nodes.

When the attribute information in the playing request doesn't contain a play address, this indicates that an electronic card selected by a user may correspond to a teleplay with video files of a plurality of respective episodes or a movie with video files of a plurality of segments. Generally, the electronic card may further contain a second-level directory, and in this case, play addresses in attribute information of sub nodes under the node corresponding to the selected electronic card may be sent to a player, so that the player can play a corresponding file according to the play addresses in the attribute information of the sub nodes. Generally, when the attribute information in a playing request doesn't contain a play address, play addresses in attribute information of sub nodes under a node corresponding to the electronic card may be sent to a player, or play addresses, names, and information on respective episodes in the attribute information of the sub nodes under the node corresponding to the electronic card may be sent to the player, so that the player can play a corresponding video file according to the play addresses and display the name and information on respective episodes of the video file during the playing.

When a player acquires a set of a play address and a name, the name may be directly displayed in a designated position on the player, and a corresponding video file may be played according to the play address. When a player acquires a plurality of play addresses and names and information on episodes, the play addresses and names may be stored in a playing list in an order of the information on episodes, and the corresponding video files may be played according to the playing list while a name and information on episode corresponding to a play address may be displayed.

Typically, if, after receiving a set of a play address and a name, a player finds the play address is the same as that of a newly played video file, the player may continue to play the video file from a previously paused position. If, after receiving a plurality of sets of play addresses and names, a player finds that one of the play addresses is the same as that of a newly played video file, the player may continue to play a video file corresponding to the one of the play addresses from a previously paused position.

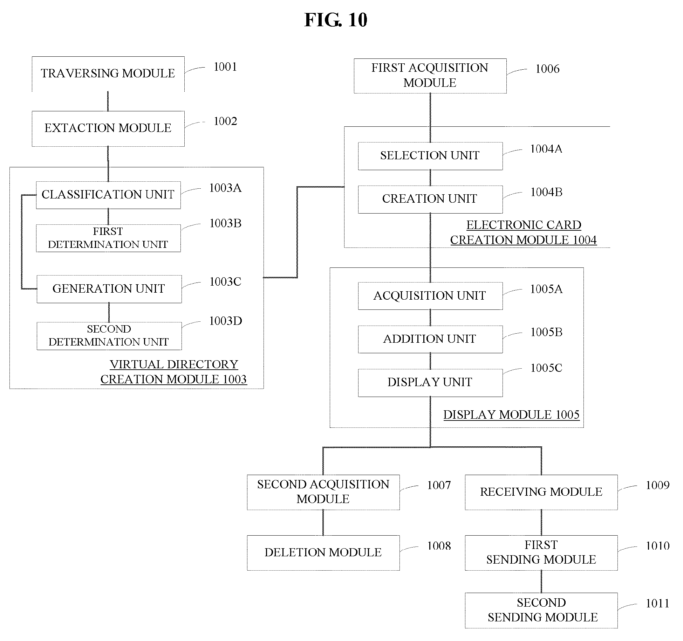

Hereinafter, an apparatus for creating a virtual directory will be explained with reference to Figs.9 and10.

Referring to Fig.9, it illustrates a block diagram of an apparatus for creating a virtual directory according to an embodiment of the present disclosure. The apparatus for creating a virtual directory includes, but is not limited to, a traversing module 901, an extraction module 902, and a virtual directory creation module 903.

The traversing module 901 may be configured to traverse files of a designated type in a storage region.

The extraction module 902 may be configured to extract attribute information of the files of the designated type traversed by the traversing module 901, the attribute information including previous two or all of names, play addresses, information on episode of the files of the designated type.

The virtual directory creation module 903 may be configured to create a virtual directory according to the attribute information of the files of the designated type extracted by the extraction module 902.

Accordingly, by acquiring all the files of a designated type in a designated storage region and creating a virtual directory according to attribute information of the acquired files of the designated type, the apparatus for creating a virtual directory according to the embodiments of the present disclosure may solve problems caused by nonuniform storage locations of video files in the prior art, in which there is little possibility to find storage location of a video file to be played once for all and the operation procedure of finding the storage location of the video file from memory is cumbersome. Also, all of the files of the same designated type in respective partitions of an electronic device and external devices may be uniformly placed in a virtual directory, and thus the desired file of the designated type may be directly found in the virtual directory, thereby realizing a quick finding of the desired file of the designated type.

Referring to Fig.10, it illustrates a block diagram of an apparatus for creating a virtual directory according to another exemplary embodiment of the present disclosure. The apparatus for creating a virtual directory includes, but is not limited to, a traversing module 1001, an extraction module 1002, and a virtual directory creation module 1003.

The traversing module 1001 may be configured to traverse files of a designated type in a storage region.

The extraction module 1002 may be configured to extract attribute information of the files of the designated type traversed by the traversing module 1001, the attribute information including previous two or all of names, play addresses, information on episode of the files of the designated type.

The virtual directory creation module 1003 may be configured to create a virtual directory according to the attribute information of the files of the designated type extracted by the extraction module 1002.

In an embodiment, the virtual directory creation module 1003 may include: a classification unit 1003a, a first determination unit 1003b, a generation unit 1003c, and a second determination unit 1003d.

The classification unit 1003a may be configured to classify the attribute information with a same name into a classification.

The first determination 1003b may be configured to, when there is one piece of attribute information in a classification, determining the attribute information as a node in a first-level directory of the virtual directory, the node including a name and a play address of a file of the designated type corresponding to the attribute information.

The generation unit 1003c may be configured to, when there are at least two pieces of attribute information in the classification and the attribute information includes information on episode, generate a node in the first-level directory for the classification, the node including at least a name of files of the designated type corresponding to the attribute information in the classification.

The second determination unit 1003d may be configured to determine respective attribute information in the classification as sub nodes in a second-level directory of the virtual directory, respectively, under the node in the first-level directory generated by the generation unit 1003c, the sub nodes including names, play addresses, and information on episode of the files of the designated type corresponding to the attribute information.

In an embodiment, the generation 1003c may include a creation sub unit, a first determination sub unit, a second determination sub unit, and a third determination sub unit.

The creation sub unit may be configured to create a node in the first-level directory corresponding to the classification.

The first determination sub unit may be configured to determine a name in the attribute information in the classification as a name of the node in the first-level directory.

The second determination sub unit may be configured to determine the number of the attribute information in the classification as information on a total number of episodes in the node in the first-level directory.

The third determination sub unit may be configured to determine the name determined by the first determination sub unit and information on episode determined by the second determination sub unit as contents included in the node.

In an embodiment, the apparatus for creating a virtual directory may further include an electronic card creation module 1004 and a displaying module 1005.

The electronic card creation module 1004 may be configured to create an electronic card for the node in the first-level directory according to the attribute information corresponding to the node.

The displaying module 1005 may be configured to display in a designated display region the electronic card corresponding to the node in the first-level directory.

In an embodiment, the displaying module 1005 may include an acquisition unit 1005a, an addition unit 1005b, and a displaying unit 1005c.

The acquisition unit 1005a may be configured to acquire poster information of files of the designated type corresponding to the node in the first-level directory, the poster information being a picture indicating contents of the files of the designated type.

The addition unit 1005b may be configured to add the poster information acquired by the acquisition unit 1005a to the electronic card corresponding to the node.

The displaying unit 1005c may be configured to display in a designated display region the electronic card added with the poster information and corresponding to the node.

In an embodiment, a node in the first-level directory may further include a category of a file of the designated type corresponding to attribute information corresponding to the node, and the apparatus for creating a virtual directory may further include a first acquisition module 1006.

The first acquisition module 1006 may be configured to acquire a displaying request containing a designated category.

The electronic card creation module 1004 may include a selection unit 1004a and a creation unit 1004b.

The selection unit 1004a may be configured to select a node corresponding to attribute information containing the designated category in the first-level directory.

The creation module 1004b may be configured to create an electronic card for the selected node according to the attribute information corresponding to the node selected by the selection unit 1004a.

The displaying module 1005 may be further configured to:
display in a designated display region an electronic card corresponding to the selected node.

In an embodiment, a node in the first-level directory may further include a category of files of the designated type corresponding to attribute information corresponding to the node, and the apparatus for creating a virtual directory may further include a second acquisition module 1007 and a deletion module 1008.

The second acquisition module 1007 may be configured to acquire a displaying request containing a designated category.

The deletion module 1008 may be configured to delete an electronic card displayed in the designated display region and corresponding to attribute information without the designated category.

In an embodiment, the apparatus for creating a virtual directory may further include a receiving module 1009, a first sending module 1010, and a second sending module 1011.

The receiving module 1009 may be configured to receive a playing request generated when a user selects an electronic card in a designated display region, the playing request including attribute information corresponding to the electronic card.

The first sending module 1010 may be configured to, when attribute information in the playing request received by the receiving module 1009 contains a play address, send the play address of the attribute information corresponding to the electronic card to a player, so that the player plays a file of the designated type corresponding to the electronic card according to the play address in the attribute information.

The second sending module 1011 may be configured to, when attribute information in the playing request received by the receiving module 1009 doesn't contain a play address, sending play addresses in attribute information of all of sub nodes of the node corresponding to the electronic card to a player, so that the player plays, according to the play addresses in the attribute information in the sub nodes, files of the designated type corresponding to the sub nodes.

Accordingly, by acquiring all the files of a designated type in a designated storage region, creating a virtual directory containing a first-level directory and a second-level directory according to attribute information of the acquired files of the designated type, providing a corresponding poster information for electronic cards in the first-level directory, and displaying in a designated display region the electronic cards with poster information in the first-level directory, the apparatus for creating a virtual directory according to the embodiments of the present disclosure may solve problems caused by nonuniform storage locations of video files in the prior art, in which there is little possibility of finding storage location of a video file to be played once for all and the operation procedure of finding the storage location of the video file from memory is cumbersome. Also, since all of the files with a same designated type in respective partitions of an electronic device and external devices are uniformly placed in a virtual directory, the desired file of the designated type may be directly found in the virtual directory, and since an electronic card to be played may be added with poster information, the desired electronic card may be more intuitively found by a user, thereby realizing a quick finding of a desired file of the designated type.

It should be noted that, when the apparatus for creating a virtual directory according to the above embodiments creates the virtual directory, the division manner of the above functional modules is taken only for an example to explain. In practical application, the above functions may be assigned to different functional modules as desired, that is, the internal structure of the mobile terminal may be divided into different functional modules to accomplish all or a part of the functions described above. Besides, the embodiments of the apparatus for creating a virtual directory and the above embodiments of the method for creating a virtual directory belong to the same inventive concept, and the specific operating procedure of the apparatus may refer to the embodiments of the method. Therefore, the description thereof will not be repeated herein.

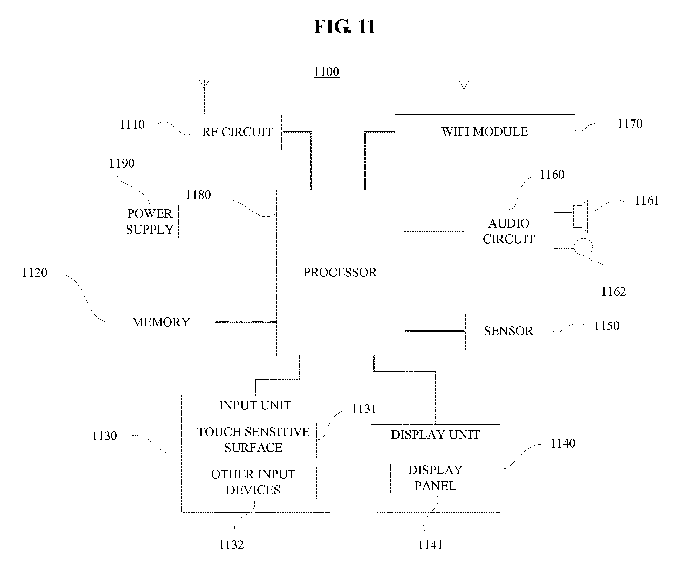

Referring to Fig.11, it illustrates a block diagram of an electronic device according to the present disclosure. The electronic device is configured to implement the method of creating a virtual directory provided by the above embodiments. The electronic device may include one or more components as below: a processor configured to execute computer program instructions to implement various flow and method, a random access memory (RAM) and a read only memory (ROM) configured to store information and program instructions, a memory configured to store data and information, a database configured to store table, directory, and other data structure, a I/O device, an interface, and antenna, etc..

Specifically, the electronic device 1100 may include a RF circuit (Radio Frequency) circuit 1110, a memory 1120 including one or more computer-readable storage medium, an input unit 1130, a display unit 1140, a sensor 1150, an audio circuit 1160, a short-range wireless transmission module 1170, a processor 1180 including one or more processing cores, a power supply 1190, and other components. It should be appreciated by those skilled in the art that, the structure of the electronic device shown in Fig. 11 does not constitute a limitation to the electronic device, and it may include more or less components than those illustrated in the drawings, or combine some of the components, or be composed of different components.

The radio frequency circuit 1110 may be configured to transmit and receive information during the transmitting and receiving of information or communication. In particular, after receiving downlink information from a base station, the radio frequency circuit 1110 transmits the information to one or more processors 180 to process. Also, the radio frequency circuit 1110 transmits uplink data to the base station. Generally, the radio frequency circuit 1110 as a communication unit includes, but is not limited to, an antenna, at least one amplifier, a tuner, one or more oscillators, a subscriber identity module (SIM) card, a transceiver, a coupler, a LNA (Low Noise Amplifier), a duplexer, etc. Furthermore, the radio frequency circuit 1110 may communicate with other devices through a wireless network and Internet. The wireless network may use any communication standards or protocols, including but not limited to GSM (Global System of Mobile communication), GPRS (General Packet Radio Service), CDMA (Code Division Multiple Access), WCDMA (Wideband Code Division Multiple Access), LTE (Long Term Evolution), e-mail, SMS (Short Messaging Service), and so on.

The memory 1120 may be configured to store software programs and modules. The processor 180 implements various functions and data processing by running the software programs and modules stored in the memory 1120. The memory 1120 may mainly include a programs storage area and a data storage area, wherein the programs storage area may store an operation system program, an application required by at least one function (such as a function of sound playback, a function of image playback, etc.), and so on, and the data storage area may store data (such as audio data, phone book, etc.) created during the operation of the electronic device 1100, and so on. In addition, the memory 1120 may include a high-speed random access memory and may also include a non-volatile memory. For example, the memory 1120 includes at least one disk storage device, a flash memory device, or other volatile solid-state memory devices. Accordingly, the memory 1120 may also include a memory controller to provide access for the processor 1180 and the input unit 1130 to the memory 1120.

The input unit 1130 may be configured to receive the input numbers or characters, and generate keyboard, mouse, joystick, optical or trackball input signals related to a user setting and a functional control. Specifically, the input unit 130 may include a touch sensitive surface 1131 and other input device 1132. The touch sensitive surface 1131, also known as a touch screen or a track pad, may collect touch operations on or near the touch sensitive surface 1131 from a user (such as an operation on or near the touch sensitive surface 1131 by a user using any suitable object or accessory component such as a finger, a stylus and the like), and drive a corresponding connection device according to a preset routine. Alternatively, the touch sensitive surface 1131 may include both of a touch detection device and a touch controller. Here, the touch detection device detects a touching position of a user, detects a signal caused by the touch operation, and transmits the signal to the touch controller. The touch controller receives touch information from the touch detection device, transform it into coordinates of the touch point, and send it to the processor 1180. The touch controller may also receive a command from the processor 1180 and execute the command. In addition, the touch sensitive surface 1131 may be realized in various types, such as resistive, capacitive, infrared and acoustic wave types. In addition to the touch sensitive surface 1131, the input unit 1130 may also include other input device 1132. Specifically, the other input device 1132 may include, but is not limited to, one or more of a physical keyboard, function buttons (such as volume control buttons, switch buttons, etc.), a trackball, a mouse, an operation lever, and so on.

The display unit 1140 may be configured to display information input by a user or information provided to the user and various graphical user interfaces of the terminal 1100. These graphical user interfaces may consist of graphics, text, icon, video, and any combination thereof. The display unit 1140 may include a display panel 1141, and alternatively, the display panel 1141 may be configured by LCD (Liquid Crystal Display), OLED (Organic Light-Emitting Diode), and so on. Further, the touch sensitive surface 1131 may cover the display panel 1141. When the touch sensitive surface 1131 detects a touch operation thereon or near, the touch operation is sent to the processor 180 to determine the type of touch event, and subsequently the processor 1180 provides a corresponding visual output on the display panel 1141 according to the type of touch event. Although the touch sensitive surface 1131 and the display panel 1141 in Fig. 11 are two separate components to accomplish the input function and the output function respectively, in some embodiments, the touch sensitive surface 1131 and the display panel 1141 may be integrated into a component to realize both of the input and output functions

The electronic device 1100 may further include at least one kind of sensor 1150, such as a light sensor, a motion sensor, and other sensor. Specifically, the light sensor may include an ambient light sensor and a proximity sensor. Here, the ambient light sensor may adjust the brightness of the display panel 1141 according to the brightness of the ambient light. The proximity sensor may turn off the display panel 1141 and/or backlight when the electronic device 1100 moves close to an ear. As a kind of the motion sensor, a gravity sensor may detect the amplitude of the acceleration in each direction (typically in three axes), and may detect the amplitude and the direction of the gravity in a stationary state , which may be applied to the applications for recognizing the attitudes of the mobile phone (such as horizontal and vertical screen switching, games, attitudes calibration of a magnetometer), the applications with functions related to vibration recognition (such as a pedometer, clicking), etc. The electronic device 1100 may also be equipped with other sensors such as a gyroscope, a barometer, a hygrometer, a thermometer, an infrared sensor, etc., the description of which will be omitted herein.

The audio circuit 1160, a speaker 1161 and a microphone 1162 may provide an audio interface between the user and the electronic device 1100. The audio circuit 1160 may transform the received audio data into an electrical signal which is transmitted to the speaker 1161 and transformed into a sound signal to be output by the speaker 1161. On the other hand, the microphone 1162 transforms the collected sound signal into an electrical signal which is received and transformed into audio data by the audio circuit 1160, and then the audio data, after being output to the processor 1180 to be processed, is transmitted to, for example, another mobile terminal via the RF circuit 1110 or output to the memory 1120 for further processing. The audio circuit 1160 may also include a headphone jack to allow a communication between an external headphone and the electronic device 1100.

The short-range wireless transmission module may be a WIFI (wireless fidelity) module or a Bluetooth module or the like. The electronic device 1100 may allow a user to send and receive email, browse webpage and access streaming media, and the like through the short-range wireless transmission module 1170 which provides a wireless broadband Internet access. Although Fig. 11 shows the short-range wireless transmission module 1170, it should be understood that the short-range wireless transmission module 1170 is not a necessary component of the electronic device 1100, and may be omitted as desired without change the substantive scope of the invention.

The processor 1180 is a control center of the electronic device 1100 that connects various parts of the entire mobile phone through various interfaces and circuits, performs various functions and processes data by running and executing software programs and/or modules stored in the memory 1120 and by calling the data stored in the memory 1120, so as to monitor the overall mobile phone. Alternatively, the processor 1180 may include one or more processing cores. Preferably, the processor 1180 may be integrated with an application processor that mainly processes an operation system, a user interface and applications and a modem processor that mainly processes the wireless communication. It should be understood that, the above modem processor may be not integrated in the processor 1180.

The electronic device 1100 may also include a power supply 1190 (such as a battery) to supply power to each component. Preferably, the power supply may be logically connected to the processor 1180 through a power supply management system, so as to manage the functions such as charging, discharging and power consumption, etc. through the power supply management system. The power supply 1190 may also include any one or more components of an AC or DC power, a recharging system, a power fault detection circuit, a converter or an inverter, a power status indicator, etc.

Although not shown, the electronic device 1100 may also include a camera, a Bluetooth module, a touch screen, and so on, the details of which are not repeated herein. In this specific embodiment, the display unit of the electronic device 1100 is a touch screen display

In addition to the one or more processors 1180, the electronic device 1100 further includes a memory that stores one or more modules configured to be executable by the one or more processors 1180. The one or more modules have the following functions:
Traversing files of the designated type in a storage region;
Extracting attribute information of the traversed files of the designated type, the attribute information including the previous two or all of names, play addresses, information on episode of the files of the designated type; and
Creating a virtual directory according to the attribute information on the files of the designated type.

In an embodiment, the creating a virtual directory according to the attribute information on the file of the designated type may include:
Classifying the attribute information with the same name into a classification;
When the attribute information in the classification is one, determining the attribute information as a node in a first-level directory of the virtual directory, the node including a name and a play address of the file of the designated type corresponding to the attribute information;
When the attribute information in the classification is at least two and includes information on episode, generating a node in the first-level directory for the classification, the node at least including a name of the file of the designated type corresponding to the attribute information in the classification; and
Determining the respective attribute information in the classification respectively, as sub nodes in a second-level directory of the virtual directory under the node in the first-level directory, the sub nodes including names, play addresses, and information on episode of the file of the designated type corresponding to the attribute information.

In an embodiment of the present disclosure, the generating a node in the first-level directory for the classification includes:
Creating a node in the first-level directory corresponding to the classification;
Determining a name in the attribute information in the classification as a name of the node in the first-level directory;
Determining the number of the attribute information in the classification as information on the number of episodes in the node in the first-level directory; and
Determining the name and information on the number of episodes as contents included in the node.

In an embodiment of the present disclosure, the method may further include:
Creating an electronic card for the node according to the attribute information corresponding to the node in the first-level directory; and
Displaying in a designated display region the electronic card corresponding to nodes in the first-level directory.

In an embodiment of the present disclosure, the displaying in a designated display region an electronic card corresponding to the node in the first-level directory may include:
Acquiring poster information of the file of the designated type corresponding to the node in the first-level directory, the poster information being a picture indicating contents of the file of the designated type;
Adding the poster information to the electronic card corresponding to the node; and
Displaying in a designated display region the electronic card added with the poster information and corresponding to the node.

In an embodiment of the present disclosure, the node in the first-level directory further includes a type of the file of the designated type corresponding to the attribute information corresponding to the node, and the method further includes:
Acquiring a displaying request containing a designated type;

The creating an electronic card for the node according to the attribute information corresponding to the node in the first-level directory includes:
Selecting a node corresponding to the attribute information in the first-level directory containing the designated type; and
Creating the electronic card for the selected node according to the attribute information corresponding to the selected node;

The displaying in a designated display region an electronic card corresponding to the node in the first-level directory includes:
Displaying an electronic card corresponding to the selected node in the designated display region.

In an embodiment of the present disclosure, the attribute information further contains a type of the file of the designated type, and the method further includes:
Acquiring a displaying request containing a designated type; and
Deleting an electronic card displayed in the designated display region and corresponding to attribute information without the designated type.

In an embodiment of the present disclosure, the method may further include:
Receiving a playing request generated when a user selects an electronic card in a designated display region, the playing request including attribute information corresponding to the electronic card;
When the attribute information contains a play address, sending a play address of attribute information corresponding to the electronic card to a player, so that the player plays a file of the designated type corresponding to the electronic card according to the play address in the attribute information; and
When the attribute information doesn't contain a play address, sending play addresses in attribute information of all of sub nodes of the node corresponding to the electronic card to a player, so that the player, according to the play addresses in the attribute information in the sub nodes, plays files of the designated type corresponding to the sub nodes.

Accordingly, by acquiring files with all designated types in a designated storage region and creating a virtual directory according to attribute information of the acquired files of the designated type, the electronic device according to the embodiments of the present disclosure may solve problems that due to the irregular storage locations of video files in the prior art, there is little possibility to find storage location of a video file to be played once for all and the operation procedure of finding the storage location of the video file from memory is cumbersome. Also, all of the files with the same designated type in respective partitions of an electronic device and external devices are placed uniformly in a virtual directory, and thus the desired file of the designated type may be directly found in the virtual directory, thereby realizing the quick finding of the desired file of the designated type.

The reference number of the above embodiments of the present disclosure is only illustrated for description and doesn't indicate superiority or inferiority of the embodiments.

It should be understood by those skilled in the art that part or all of the steps in the embodiments may be implemented with hardware, or programs instructing the related hardware. The programs may be stored in a computer readable storage medium. The storage medium described as above may be a read-only memory, a magnetic disc, an optical disc or the like.

The embodiments described above are only illustrated as preferred embodiments of the present disclosure, and are not intended to limit the present disclosure. All modifications, equivalents improvements made within the spirit and principles of the present disclosure shall fall within the protection scope of the present disclosure.

## Claims

1. A method for creating a virtual directory, **characterized in that**, the method comprises:
traversing files of a designated type in a storage region;
extracting attribute information of the traversed files of the designated type, the attribute information comprising former two or all of names, play addresses, information on episode of the files of the designated type; and
creating a virtual directory according to the attribute information of the files of the designated type.

2. The method according to claim 1, **characterized in that**, the creating a virtual directory according to the attribute information of the files of the designated type comprises:
classifying attribute information comprising a same name into a classification;
when there is one piece of attribute information in the classification, determining the attribute information as a node in a first-level directory of the virtual directory, the node comprising a name and a play address of a file of the designated type corresponding to the attribute information;
when there are at least two pieces of attribute information in the classification and the attribute information comprises information on episode, generating a node in the first-level directory for the classification, the node comprising at least a name of files of the designated type corresponding to the attribute information in the classification; and
determining respective attribute information in the classification as sub nodes in a second-level directory of the virtual directory under the node in the first-level directory, respectively, the sub nodes including names, play addresses, and information on episode of the files of the designated type corresponding to the attribute information.

3. The method according to claim 2, **characterized in that**, the generating a node in the first-level directory for the classification comprises:
creating a node corresponding to the classification in the first-level directory;
determining a name in the attribute information in the classification as a name of the node in the first-level directory;
determining a number of the attribute information in the classification as information on a total number of episodes in the node in the first-level directory; and
determining the name and the information on the total number of episodes as contents comprised in the node.

4. The method according to claim 3, **characterized in that**, the method further comprises:
creating an electronic card for the node in the first-level directory according to the attribute information corresponding to the node; and
displaying in a designated display region the electronic card corresponding to the node in the first-level directory.

5. The method according to claim 4, **characterized in that**, the displaying in a designated display region the electronic card corresponding to the node in the first-level directory comprises:
acquiring poster information of a file of the designated type corresponding to a node in the first-level directory, the poster information being a picture indicating content of the file of the designated type;
adding the poster information to the electronic card corresponding to the node; and
displaying in the designated display region the electronic card added with the poster information and corresponding to the node.

6. The method according to claim 4, **characterized in that**, a node in the first-level directory further comprises a category of files of the designated type corresponding to attribute information corresponding to the node, and the method further comprises:
acquiring a displaying request comprising a designated category;
the creating an electronic card for the node in the first-level directory according to the attribute information corresponding to the node comprises:
selecting a node corresponding to attribute information comprising the designated category in the first-level directory; and
creating an electronic card for the selected node according to the attribute information corresponding to the selected node; and
the displaying in the designated display region the electronic card corresponding to the node in the first-level directory comprises:
displaying an electronic card corresponding to the selected node in the designated display region.

7. The method according to claim 4, **characterized in that**, a node in the first-level directory further comprises a category of files of the designated type corresponding to attribute information corresponding to the node, and the method further comprises:
acquiring a displaying request comprising a designated category; and
deleting an electronic card displayed in the designated display region and corresponding to attribute information without the designated category.

8. The method according to any one of claims 4-7, **characterized in that**, the method further comprises:
receiving a playing request generated when a user selects an electronic card in the designated display region, the playing request comprising attribute information corresponding to the electronic card;
when the attribute information in the playing request comprises a play address, sending a play address in attribute information corresponding to the electronic card to a player, so that the player plays a file of the designated type corresponding to the electronic card according to the play address in the attribute information; and
when the attribute information in the playing request doesn't comprise a play address, sending play addresses in attribute information of all of sub nodes of the node corresponding to the electronic card to a player, so that the player plays, according to the play addresses in the attribute information of the sub nodes, files of the designated type corresponding to the sub nodes.

9. An apparatus for creating a virtual directory, **characterized in that**, the apparatus comprises:
a traversing module configured to traverse files of a designated type in a storage region;
an extraction module configured to extract attribute information of the files of the designated type traversed by the traversing module, the attribute information comprising former two or all of names, play addresses, information on episode of the files of the designated type; and
a virtual directory creation module configured to create a virtual directory according to the attribute information of the files of the designated type extracted by the extraction module.

10. The apparatus according to claim 9, **characterized in that**, the virtual directory creation module comprises:
a classification unit configured to classify the attribute information comprising a same name into a classification;
a first determination unit configured to, when there is one piece of attribute information in the classification classified by the classification unit, determine the attribute information as a node in a first-level directory of the virtual directory, the node comprising a name and a play address of a file of the designated type corresponding to the attribute information;
a generation unit configured to, when there are at least two pieces of attribute information in the classification classified by the classification unit and the attribute information comprises information on episode, generate a node in the first-level directory for the classification, the node comprising at least a name of files of the designated type corresponding to the attribute information in the classification; and
a second determination unit configured to determine respective attribute information in the classification as sub nodes in a second-level directory of the virtual directory under the node generated in the first-level directory by the generation unit, respectively, the sub nodes comprising names, play addresses, and information on episode of the files of the designated type corresponding to the attribute information.

11. The apparatus according to claim 10, **characterized in that**, the generation unit comprises:
a creation sub unit configured to create a node in the first-level directory corresponding to the classification;
a first determination sub unit configured to determine a name in the attribute information in the classification as a name of the node created in the first-level directory by the creation sub unit;
a second determination sub unit configured to determine a number of the attribute information in the classification as information on a total number of episodes of the node created in the first-level directory by the creation sub unit; and
a third determination sub unit configured to determine the name determined by the first determination sub unit and the information on the total number of episodes determined by the second determination sub unit, as contents comprised in the node.

12. The apparatus according to claim 11, **characterized in that**, the apparatus further comprises:
an electronic card creation module configured to create an electronic card for the node in the first-level directory according to the attribute information corresponding to the node; and
a displaying module configured to display in a designated display region the electronic card corresponding to the node in the first-level directory.

13. The apparatus according to claim 12, **characterized in that**, the displaying module comprises:
an acquisition unit configured to acquire poster information of a file of the designated type corresponding to a node in the first-level directory, the poster information being a picture indicating content of the file of the designated type;
an addition unit configured to add the poster information acquired by the acquisition unit to the electronic card corresponding to the node; and
a displaying unit configured to display in the designated display region the electronic card added with the poster information and corresponding to the node.

14. The apparatus according to claim 12, **characterized in that**, a node in the first-level directory further comprises a category of files of the designated type corresponding to attribute information corresponding to the node, and the apparatus further comprises:
a first acquisition module configured to acquire a displaying request comprising a designated category;
the electronic card creation module comprises:
a selection unit configured to select a node corresponding to attribute information comprising the designated category in the first-level directory; and
a creation unit configured to create an electronic card for the selected node according to the attribute information corresponding to the node selected by the selection unit; and
the displaying module being further configured to:
display an electronic card corresponding to the selected node in the designated display region.

15. The apparatus according to claim 12, **characterized in that**, a node in the first-level directory further comprises a category of files of the designated type corresponding to attribute information corresponding to the node, and the apparatus further comprises:
a second acquisition module configured to acquire a displaying request comprising a designated category; and
a deletion module configured to delete an electronic card displayed in the designated display region and corresponding to attribute information without the designated category.

16. The apparatus according to any one of claims 12-15, **characterized in that**, the apparatus further comprises:
a receiving module configured to receive a playing request generated when a user selects an electronic card in the designated display region, the playing request comprising attribute information corresponding to the electronic card;
a first sending module configured to, when the attribute information in the playing request received by the receiving module comprises a play address, send a play address in attribute information corresponding to the electronic card to a player, so that the player plays a file of the designated type corresponding to the electronic card according to the play address in the attribute information; and
a second sending module configured to, when the attribute information in the playing request received by the receiving module doesn't comprise a play address, sending play addresses in attribute information of all of sub nodes of the node corresponding to the electronic card to a player, so that the player plays, according to the play addresses in the attribute information in the sub nodes, files of the designated type corresponding to the sub nodes.

17. An electronic device, **characterized in that**, the electronic device comprises the apparatus for creating a virtual directory according to any one of claims 9-16.
